# EUROPÄISCHE PATENTSCHRIFT

(11) **EP 0 699 719 B1**
(45) Veröffentlichungstag und Bekanntmachung des Hinweises auf die Patenterteilung: **02.01.2002**
(21) Anmeldenummer: 95810521.5
(22) Anmeldetag: 21.08.1995
(51) Int. Cl.: C09B 62/47

(54) **Azofarbstoffe, Verfahren zu deren Herstellung und deren Verwendung**
Azodyes, process for their preparation and the use thereof
Colorants azoiques, procédé pour leur préparation et leur utilisation

(30) Priorität: 30.08.1994 CH 265294; 16.09.1994 CH 283894
(43) Veröffentlichungstag der Anmeldung: 06.03.1996
(73) Patentinhaber: Ciba Specialty Chemicals Holding Inc., 4057 Basel (CH)
(72) Erfinder: Aeschlimann, Peter, CH-4123 Allschwil (CH)

(56) Entgegenhaltungen:
- EP-A- 0 024 668
- EP-A- 0 154 816
- EP-A- 0 559 617
- FR-A- 2 318 909

## Beschreibung

Die vorliegende Erfindung betrifft neue Azofarbstoffe, Verfahren zu deren Herstellung und Verwendung dieser Farbstoffe zum Färben und Bedrucken von Fasermaterialien, insbesondere textilen Fasermaterialien.

Aus der FR-A-2 318 909 sind unverbrückte Hydroxypyridonazofarbstoffe bekannt.

Gegenstand der vorliegenden Erfindung sind Azofarbstoffe der Formel 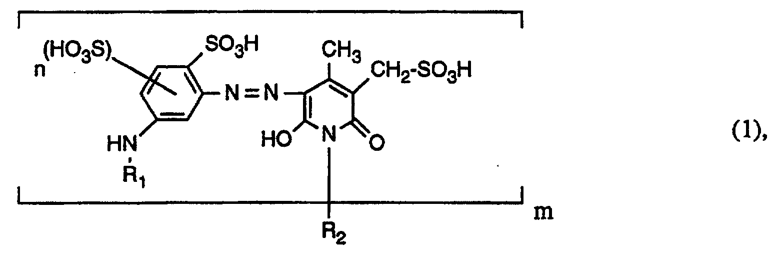 worin R₁ Acryloyl, α-Halogenacryloyl, α-Methylacryloyl oder α,β-Dihalogenpropionyl, R₂ unsubstituiertes oder durch Hydroxy, Halogen, C₁-C₄-Alkoxy substituiertes C₂-C₈-Alkylen, n die Zahl 0 oder 1 und m die Zahl 2 ist.

Als α-Halogenacryloyl kommt für R₁ z.B. -CO-C(Br)=CH₂ und -CO-C(Cl)=CH₂ in Betracht. Als α,β-Dihalogenpropionyl kommt für R₁ z.B. α,β-Dibrom- oder α,β-Dichlorpropionyl in Betracht.

R₂ als C₂-C₈-Alkylen ist z.B. -CH₂-CH₂-, -CH₂-CH₂-CH₂-, -CH₂-(CH₂)₂-CH₂-, -CH₂-(CH₂)₃-CH₂-, -CH₂-(CH₂)₄-CH₂-, -CH₂-CH(CH₃)-CH₂-CH₂-,-CH₂-(CH₂)₅CH₂-, -CH₂-CH(CH₃)-(CH₂)₄-CH₂-.

Ebenfalls bevorzugt sind Azofarbstoffe der Formel 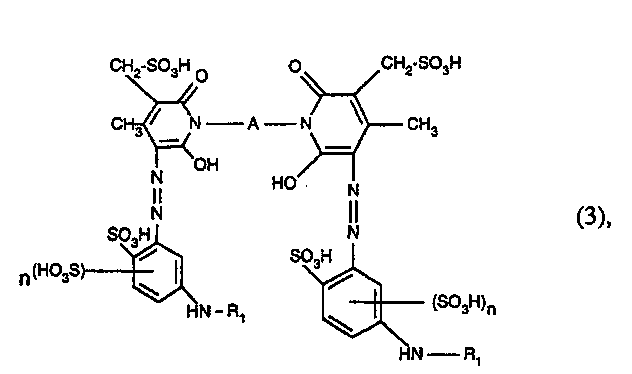 worin R₁ die unter Formel (1) angegebene Bedeutung hat, A Alkylen mit 2 bis 6 Kohlenstoffatomen ist, und n die Zahl 0 oder 1 bedeutet.

Ferner sind besonders bevorzugt Azofarbstoffe der Formel (3), worin R₁ Acryloyl, α-Bromacryloyl, α-Methylacryloyl, α-Chloracryloyl, α,β-Dibrompropionyl oder α,β-Dichlorpropionyl, A -CH₂-CH₂-, -CH₂-CH₂-CH₂-, -CH₂-(CH₂)₂-CH₂-, -CH₂-(CH₂)₃-CH₂-, -CH₂-(CH₂)₄-CH₂-, -CH₂-CH(CH₃)-CH₂-CH₂- und n die Zahl 0 oder 1 ist.

Ganz besonders bevorzugt sind ferner die Azofarbstoffe der Formel (3), worin R₁ Acryloyl, α-Bromacryloy oder α-Methylacryloyl, A -CH₂-CH₂-, -CH₂-CH₂-CH₂-, -CH₂-(CH₂)₂-CH₂-, -CH₂-(CH₂)₃-CH₂-, -CH₂-(CH₂)₄-CH₂-, -CH₂-CH(CH₃)-CH₂-CH₂- und n die Zahl 0 oder I ist.

Gegenstand der Erfindung ist ferner ein Verfahren zur Herstellung der Azofarbstoffe der Formel (1), welches dadurch gekennzeichnet ist, dass man ein Amin der Formel 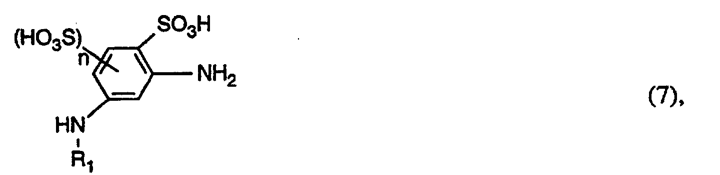 worin R₁ und n die unter Formel (1) angegebenen Bedeutungen haben, diazotiert und auf eine Kupplungskomponente der Formel 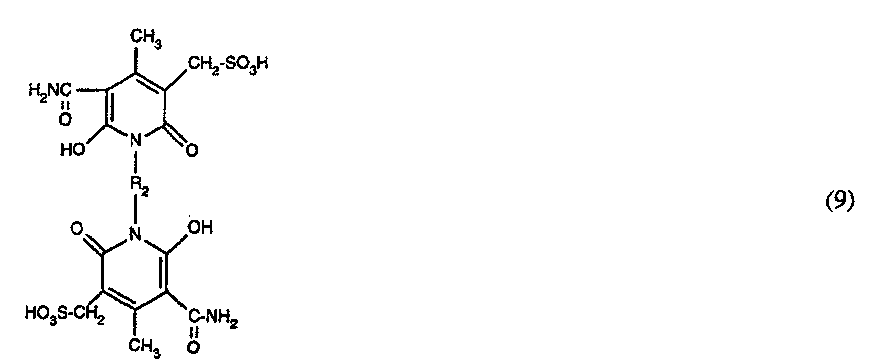 worin R₂ die unter Formel (1) angegebene Bedeutung hat, kuppelt, wobei eine halbäquimolare Menge der Kupplungskomponente eingesetzt wird.

Die Amine der Formel (7) und die Kupplungskomponente der Formel (9) sind bekannt oder können in Analogie zu bekannten Verfahren hergestellt werden.

Die Diazotierung der Amine der Formeln (7) erfolgt in an sich bekannter Weise, z.B. mit einem Nitrit, z.B. mit einem Alkalimetallnitrit, wie Natriumnitrit, in einem mineralsauren Medium, z.B. in einem salzsauren Medium, bei Temperaturen von beispielsweise -5 bis +30°C und vorzugsweise bei 0 bis 10°C.

Die Kupplung auf die Kupplungskomponente der Formel (9) erfolgt jeweils in an sich bekannter Weise, bei sauren, neutralen bis alkalischen pH-Werten und Temperaturen von beispielsweise 0 bis 30°C.

Als Beispiele für Verbindungen der Formel (7) seien 2,4-Disulfo-5-(α,β-dibrompropionylamino)-anilin, 2-Sulfo-5-(α,β-dibrompropionylamino)-anilin, 2-Sulfo-5-acryloylamino-anilin, 2,4-Disuifo-5-acryloylamino-anilin, 2,4-Disulfo-5-(a-bromacryloylamino)-anilin, 2-Sulfo-5-(α-bromacryloylamino)-anilin, 2,4-Disulfo-5-(α-methylacryloylamino)-anilin, 2-Sulfo-5-(a-methylacryloylamino)-anilin, 2,4-Disulfo-5-(α-chloracryloylamino)-anilin und 2-Sulfo-5-(α-chloracryloylamino)-anilin, genannt.

Als Beispiele für Kupplungskomponenten der Formel (9) seien genannt:

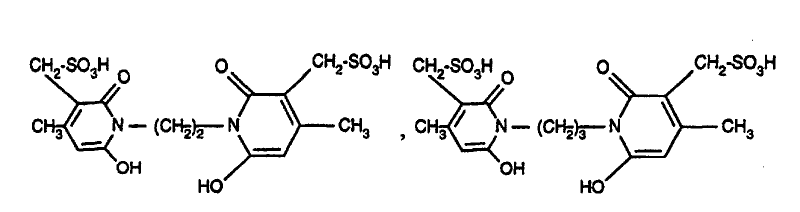

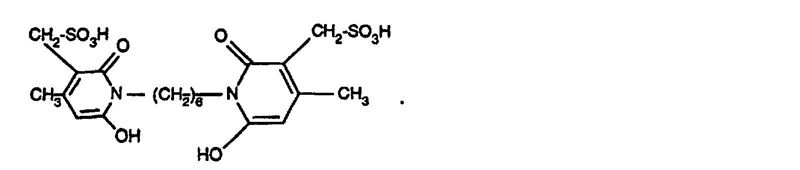

Die Kupplungskomponenten der Formel (9) können z.B. erhalten werden durch Hydrolyse der Cyangruppe zur Carbonamidgruppe eines bekannten verdoppelten Cyanmethylpyridons der Formel 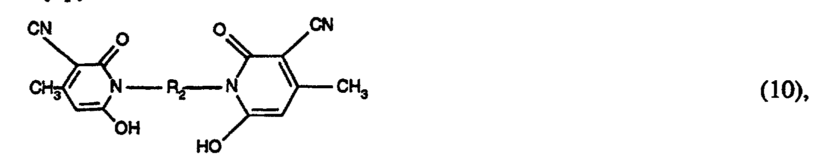 indem durch Behandlung in wasserhaltiger Schwefelsäure bei erhöhter Temperatur (80°C), die Cyanogruppe zur Carbonamidogruppe hydrolysiert wird, und anschliessender Umsetzung mit der Additionsverbindung aus Formaldehyd und Bisulfit bzw. Pyrosulfit unter neutralen Bedingungen bei leicht erhöhter Temperatur (50°C) zu der Verbindung der Formel (9). Bei der Nachfolgenden Kupplung wird die Carbonamidogruppe durch den Diazorest substituiert und man erhält Farbstoffe der allgemeinen Formel (1), worin m=2 ist.

Die Amine der Formel (7) werden z.B. erhalten, indem man ein Diamin der Formel 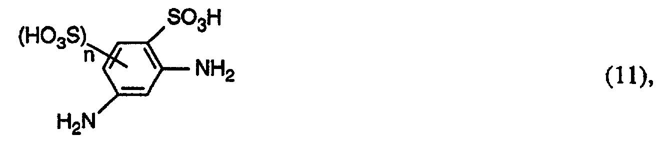 worin n die unter Formel (1) angegebene Bedeutung hat, mit einer Verbindung der Formel

Hal-R₁ (12),

worin Hal Halogen ist und R₁ die unter Formel (1) angegebene Bedeutung hat, acyliert.

Die Acylierung erfolgt bei neutralen bis schwach sauren pH-Werten und Temperaturen zwischen 0 und 15°C.

Bevorzugte Ausführungsformen des erfindungsgemässen Verfahrens sind dadurch gekennzeichnet, dass man
- ein Amin der Formel (7), worin R₁ α-Halogenacryloyl, α-Methylacryloyl oder α,β-Dihalogenpropionyl, und n die Zahl 1 ist, diazotiert und auf eine Kupplungskomponente der Formel (9), worin A Alkylen mit 2 bis 6 C-Atomen ist, kuppelt;
- ein Amin der Formel (7), worin R₁ α-Bromacryloyl oder α-Methylacryloyl, und n die Zahl 0 ist, diazotiert und auf eine Kupplungskomponente der Formel (9), worin A -CH₂-CH₂-, -CH₂-CH₂-CH₂-, -CH₂-(CH₂)₂-CH₂-, -CH₂-(CH₂)₃-CH₂-, -CH₂-(CH₂)₄-CH₂-, -CH₂-CH(CH₃)-CH₂-CH₂- ist, kuppelt;
- ein Amin der Formel (7), verwendet, worin R₁ α-Bromacryloyl ist;
- eine Kupplungskomponente der Formel (9) verwendet, worin A -CH₂-CH₂-, -CH₂-CH₂-CH₂-, -CH₂-(CH₂)₂-CH₂-, -CH₂-(CH₂)₃-CH₂-, -CH₂-(CH₂)₄-CH₂-, -CH₂-CH(CH₃)-CH₂-CH₂- ist.

Die Farbstoffe der Formel (1) liegen entweder in der Form ihrer freien Säure oder vorzugsweise als deren Salze vor.

Als Salze kommen beispielsweise die Alkali- oder Ammoniumsalze oder die Salze eines organischen Amins in Betracht.

Als Beispiel seien die Natrium-, Lithium-, Kalium- oder Ammoniumsalze oder das Salz des Mono-, Di- oder Triäthanolamins genannt.

Die erfindungsgemässen Azofarbstoffe der Formel (1) eignen sich nach an sich bekannten Methoden zum Färben und Bedrucken von stickstoffhaltigen oder hydroxygruppenhaltigen Fasermaterialien, Papier oder Leder, wie z.B. textilen Fasermaterialien aus Cellulose, Seide und natürlichen und synthetischen Polyamiden. Die erfindungsgemässen Azofarbstoffe der Formel (1) können in allgemein üblicher, gegebenenfalls zuvor aufbereiteter Form zum Färben oder Bedrucken verwendet werden. Man erhält egale Färbungen in gelben Farbtönen mit guten Allgemeinechtheiten, insbesondere guter Reib-, Nass-, Nassreib- und Lichtechtheit. Ferner sind die erfindungsgemässen Farbstoffe gut wasserlöslich. Weiterhin zeigen die erfindungsgemässen Farbstoffe ein gutes Aufbauvermögen und sind gut mit anderen Farbstoffen kombinierbar. Die erfindungsgemässen Farbstoffe der Formel (1) zeichnen sich auch durch gutes Fixiervermögen in modernen Fixierverfahren, wie z.B. Fixierung durch Elektronenstrahlen oder UV-Licht aus, insbesondere zeigen die so erhaltenen Färbungen eine sehr gute Nuancenstabilität bei Gebrauchsechtheiten (z.B. Waschechtheit). Das oben genannte Textilmaterial kann in den verschiedensten Verarbeitungsformen vorliegen, wie z.B. als Faser, Garn, Gewebe oder Gewirke.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

### Erläuterungsbeispiel 1: Herstellung der Diazokomponente

26,8 g 1,3-Phenylendiamin-4,6-disulfonsäure werden bei pH-Wert 4 in Wasser gelöst und auf 0 bis 5° gekühlt. Dann lässt man 26,3 g 2,3-Dibrompropionylchlorid unter intensivem Rühren zutropfen und hält den pH-Wert durch Zutropfen von wässriger Natronlaugelösung bei 2,0 konstant. Die Umsetzung ist beendet, wenn das Dünnschichtchromatogramm kein Ausgangsmaterial mehr zeigt. Die Reaktionsmasse wird anschliessend mit konz. Salzsäure bis zum pH-Wert 0,8 angesäuert, kalt filtriert und mit verdünnter Salzsäure gewaschen. Man erhält die Verbindung der Formel 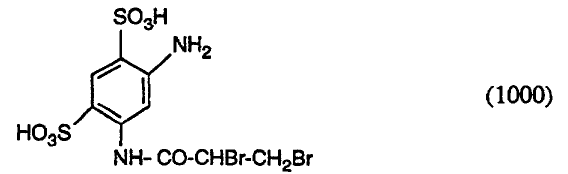 in reiner Form.

### Herstellung des Farbstoffes der Formel

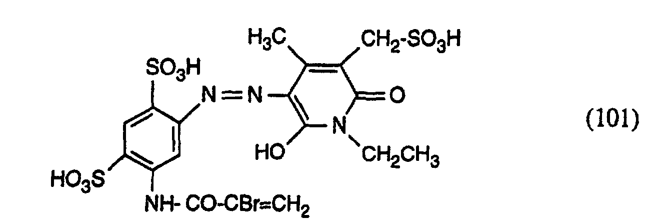

24,1 g des Amins der Formel (1000) werden in Wasser verrührt und bei 30° und pH-Wert 10 während 10 Minuten acryliert. Anschliessend wird die Lösung neutral gestellt, mit 12,5 ml 4-molarer Natriumnitritlösung versetzt und auf 5° gekühlt. Dann wird Eis zugegeben und anschliessend 12,5 ml konz. Salzsäure (33%-ig) zugegeben. Man lässt 30 Minuten ausdiazotieren und vernichtet den Nitritüberschuss dann durch Zugabe von Sulfaminsäure. Anschliessend gibt man 14,5 g des Kupplers der Formel 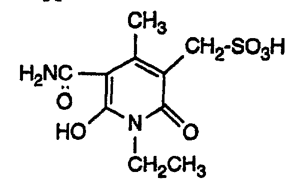 in Form einer wässrigen Lösung hinzu, stellt den pH-Wert auf 6 bis 7 ein und lässt die Temperatur auf 20° ansteigen. Nach beendeter Kupplung wird der gebildete Farbstoff mit 20 Volumenprozent Kochsalz ausgesalzen. Der gefällte Farbstoff wird abfiltriert und mit einer Kochsalzlösung gewaschen. Der Farbstoff stellt ein gelbes Pulver dar. Der erhaltene Farbstoff entspricht in Form der freien Säure der oben angegebenen Formel (101).

Beispiel 2 bis 16: Wenn man wie in Erläuterungsbeispiel 1 angegeben verfährt, jedoch anstelle des Amins der Formel 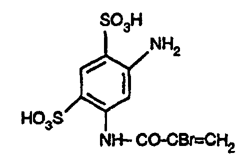 eine äquimolare Menge des Amins der Formel 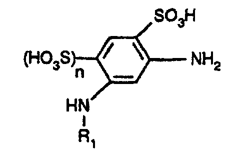 verwendet, worin R₁ und n in der folgenden Tabelle 1 angegeben sind, und als Kupplungskomponente anstelle der Verbindung der Formel 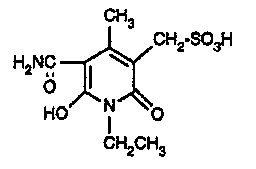 eine halbäquimolare Menge der Verbindung der Formel 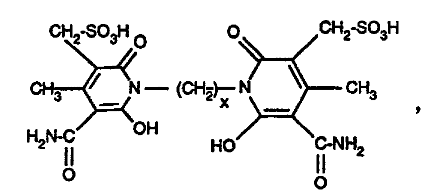 worin x die in der folgenden Tabelle 1 angegebenen Bedeutungen hat, verwendet, wobei bei der Kupplung die Carbonamidogruppe durch den Diazorest substituiert wird, so erhält man ebenfalls gelbfärbende Farbstoffe mit guten Allgemeinechtheiten.

**Tabelle 1**

| Beispiel | R₁ | n | x |
|---|---|---|---|
| 2 | -CO-CBr=CH₂ | 1 | 2 |
| 3 | -CO-CHBr-CH₂Br | 0 | 2 |
| 4 | -CO-CBr=CH₂ | 1 | 3 |
| 5 | -CO-CBr=CH₂ | 0 | 3 |
| 6 | -CO-C(CH₃)=CH₂ | 1 | 2 |
| 7 | -CO-C(CH₃)=CH₂ | 0 | 2 |
| 8 | -CO-C(CH₃)=CH₂ | 1 | 6 |
| 9 | -CO-CCl=CH₂ | 1 | 2 |
| 10 | -CO-CCl=CH₂ | 0 | 2 |
| 11 | -CO-CCl=CH₂ | 1 | 3 |
| 12 | -CO-CCl=CH₂ | 0 | 3 |
| 13 | -CO-CH=CH₂ | 1 | 2 |
| 14 | -CO-CH=CH₂ | 0 | 2 |
| 15 | -CO-CH=CH₂ | 1 | 6 |
| 16 | -CO-CBr=CH₂ | 1 | 6 |

### Färbevorschrift I

Man färbt 10 Teile Polyamid-6,6-Gewebe in 500 Teilen einer wässrigen Flotte, die 2 g/l Ammonacetat enthält und mit Essigsäure auf pH 5 gestellt wird. Der Anteil des Farbstoffes beträgt 0,5 % bezogen auf das Fasergewicht. Die Färbedauer bei einer Temperatur von 98° beträgt 30 bis 90 Minuten. Das gefärbte Polyamid-6,6-Gewebe wird anschliessend herausgenommen und wie üblich gewaschen und getrocknet.

Man erhält ein gelb gefärbtes Polyamid-6,6-Gewebe, das eine reine Nuance und gute Gesamtechtheiten aufweist.

### Färbevorschrift II

2 Teile des Farbstoffes werden in 100 Teilen Wasser gelöst. Die Lösung gibt man zu 1900 Teilen kaltem Wasser, fügt 60 Teile Natriumchlorid zu und geht mit 100 Teilen eines Baumwollgewebes in dieses Färbebad ein. Man steigert die Temperatur auf 60°, wobei nach 30 Minuten 40 Teile wasserfreies Na₂CO₃ und nochmals 60 Teile Natriumchlorid zugegeben werden. Man hält die Temperatur 30 Minuten bei 60°, spült und seift dann die Färbung während 15 Minuten in einer 0,3%-igen Lösung eines ionenfreien Waschmittels bei Siedetemperatur, spült und trocknet. Man erhält ein gelb gefärbtes Baumwollgewebe mit guten Allgemeinechtheiten.

### Färbevorschrift III

Es werden 0,1 Teile des Farbstoffes in 200 Teilen Wasser gelöst und 0,5 Teile Natriumsulfat, 0,1 Teile eines Egalisierhilfsmittels (basierend auf dem Kondensationsprodukt aus einem höheren aliphatischen Amin und Ethylenoxid) sowie 0,5 Teile Natriumacetat zugegeben. Dann wird der pH-Wert mit Essigsäure (80%-ig) auf einen Wert von 5,5 gestellt. Das Färbebad wird 10 Minuten auf 50° erwärmt, und es werden dann 10 Teile eines Wollgewebes zugegeben. Man erwärmt innerhalb von ca. 50 Minuten auf eine Temperatur von 100° und färbt 60 Minuten bei dieser Temperatur. Danach lässt man auf 90° abkühlen und entnimmt das Färbegut. Das Wollgewebe wird mit warmem und kaltem Wasser gewaschen, anschliessend geschleudert und getrocknet. Man erhält ein gelb gefärbtes Wollgewebe, welches gute Nass- und Lichtechtheiten aufweist.

## Patentansprüche

1. Azofarbstoffe der Formel 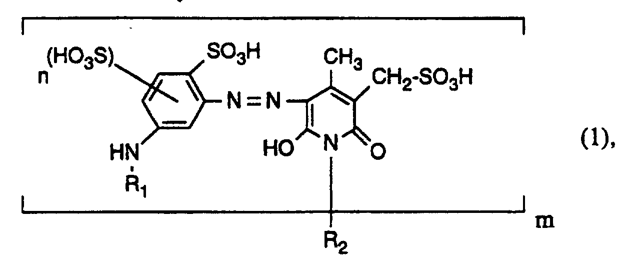 worin R₁ Acryloyl, α-Halogenacryloyl, α-Methylacryloyl oder α,β-Dihalogenpropionyl, R₂ unsubstituiertes oder durch Hydroxy, Halogen, C₁-C₄-Alkoxy substituiertes C₂-C₈-Alkylen, n die Zahl 0 oder 1 und m die Zahl 2 ist.

2. Azofarbstoffe gemäss Anspruch 1 der Formel 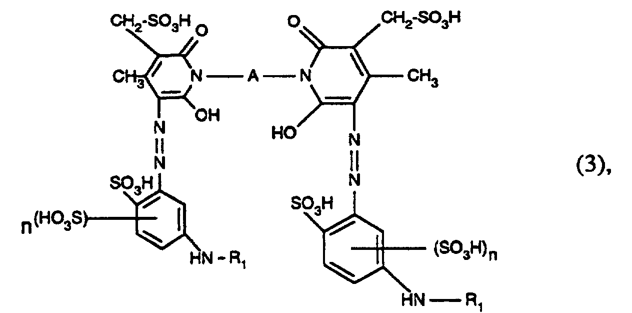 worin R₁ die in Anspruch 1 angegebene Bedeutung hat, A Alkylen mit 2 bis 6 Kohlenstoffatomen ist, und n die Zahl 0 oder 1 bedeutet.

3. Azofarbstoffe gemäss Anspruch 2, worin R₁ Acryloyl, α-Bromacryloyl, α-Methylacryloyl, α-Chloracryloyl, α,β-Dibrompropionyl oder α,β-Dichlorpropionyl, A -CH₂-CH₂-, -CH₂-CH₂-CH₂-, -CH₂-(CH₂)₂-CH₂-, -CH₂-(CH₂)₃-CH₂-, -CH₂-(CH₂)₄-CH₂-, -CH₂-CH(CH₃)-CH₂-CH₂- und n die Zahl 0 oder 1 ist.

4. Azofarbstoffe gemäss Anspruch 3, worin R₁ Acryloyl, α-Bromacryloy oder α-Methylacryloyl, A -CH₂-CH₂-. -CH₂-CH₂-CH₂-, -CH₂-(CH₂)₂-CH₂-, -CH₂-(CH₂)₃-CH₂-, -CH₂-(CH₂)₄-CH₂-, -CH₂-CH(CH₃)-CH₂-CH₂- und n die Zahl 0 oder 1 ist.

5. Verfahren zur Herstellung der Azofarbstoffe der Formel (1) gemäss Anspruch 1, **dadurch gekennzeichnet, dass** man ein Amin der Formel 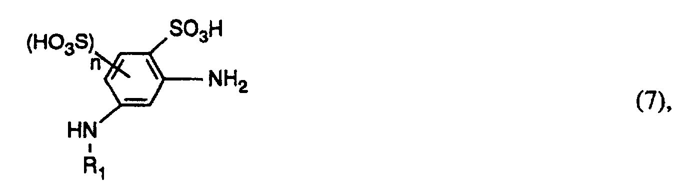 worin R₁ und n die in Anspruch 1 angegebenen Bedeutungen haben, diazotiert und auf eine Kupplungskomponente der Formel 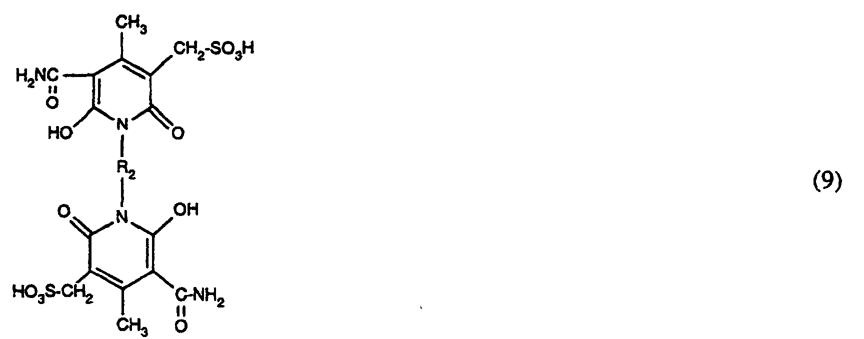 worin R₂ die in Anspruch 1 angegebenen Bedeutungen hat, kuppelt.

6. Verwendung der Azofarbstoffe gemäss den Ansprüchen 1 bis 4 zum Färben und Bedrucken von stickstoffhaltigen oder hydroxygruppenhaltigen Fasermaterialien.

## Claims

1. An azo dye of formula 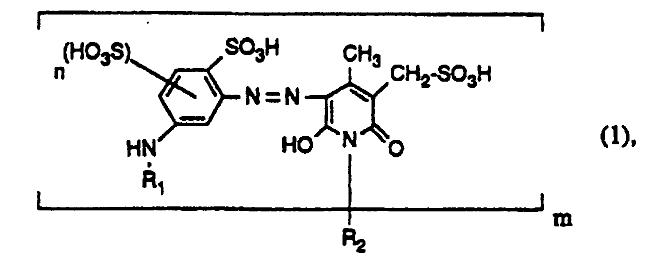 wherein R₁ is acryloyl, α-haloacryloyl, α-methylacryloyl or α,β-dihalopropionyl, R₂ is C₂-C₈alkylene which is unsubstituted or substituted by hydroxy, halogen or C₁-C₄alkoxy, n is 0 or 1 and m is 2.

2. An azo dye according to claim 1 of formula 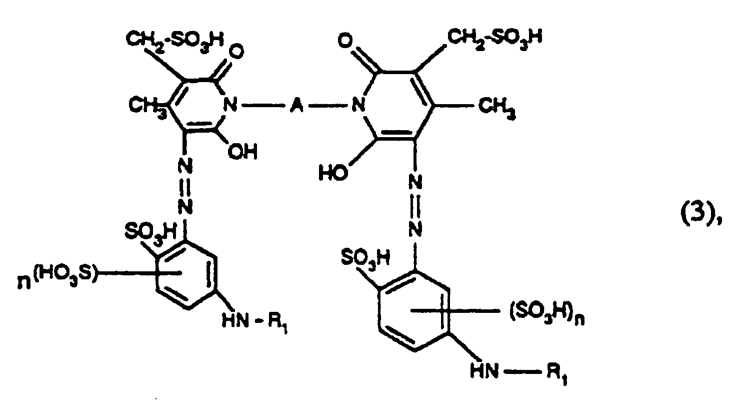 wherein R₁ is as defined in claim 1, A is alkylene of 2 to 6 carbon atoms, and n is 0 or 1.

3. An azo dye according to claim 2, wherein R₁ is acryloyl, α-bromoacryloyl, α-methylacryloyl, α-chloroacryloyl, α,β-dibromopropionyl or α,β-dichloropropionyl, A is -CH₂-CH₂-, -CH₂-CH2-CH₂-,CH₂- (CH₂)₂-CH₂-, -CH₂-(CH₂)₃-CH₂-, -CH₂-(CH₂)₄-CH₂- or -CH₂- CH(CH₃)-CH₂-CH₂-, and n is 0 or 1.

4. An azo dye according to claim 3, wherein R₁ is acryloyl, α-bromoacryloyl or α-methylacryloyl, A isCH₂-CH₂-, -CH₂-CH₂-CH₂-, -CH₂- (CH₂)₂-CH₂-, -CH₂- (CH₂)₃-CH₂-, -CH₂-(CH₂)₄-CH₂- or -CH₂-CH(CH₃)-CH₂-CH₂-, and n is 0 or 1.

5. A process for the preparation of an azo dye of formula (1) according to claim 1, which comprises diazotising an amine of formula 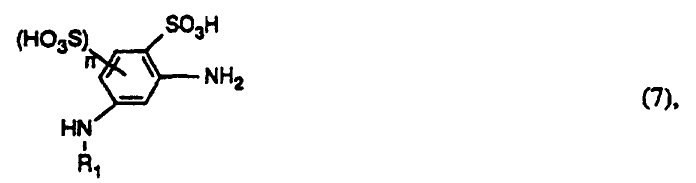 wherein R₁ and n are as defined in claim 1, and coupling the diazo compound obtained to a coupling component of formula 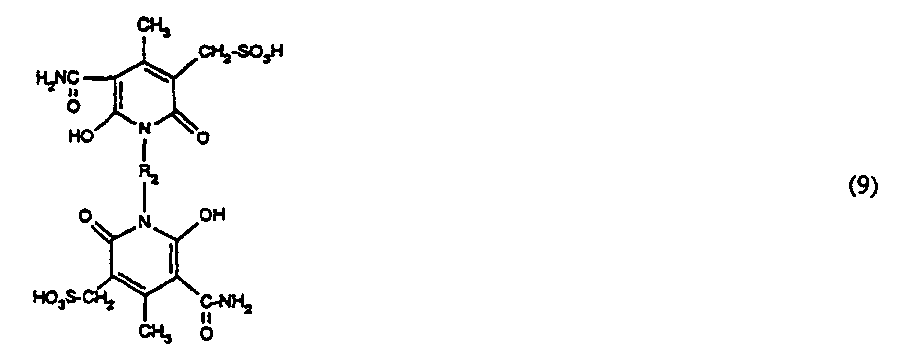 wherein R₂ is as defined in claim 1.

6. The use of an azo dye as claimed in any one of claims 1 to 4 for dyeing or printing nitrogen-containing or hydroxyl-containing fibre materials.

## Revendications

1. Colorants azoïques de formule 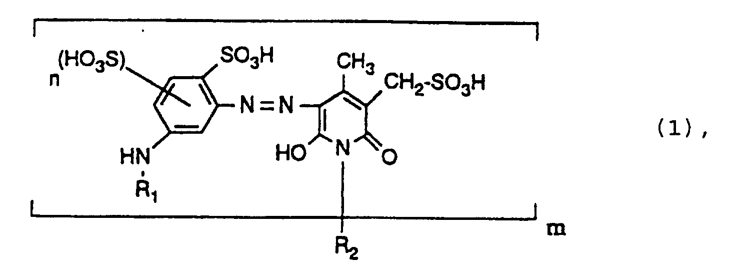 où
R₁ représente des groupes acryloyle, α-halogénoacryloyle, α-méthylacryloyle ou α,β-dihalogénopropionyle, R₂ représente un groupe alkylène en C₂-C₈ non substitué ou substitué par des substituants hydroxy, halogène, alkoxy en C₁-C₄, n vaut 0 ou 1 et m vaut 2.

2. Colorants azoïques selon la revendication 1 de formule 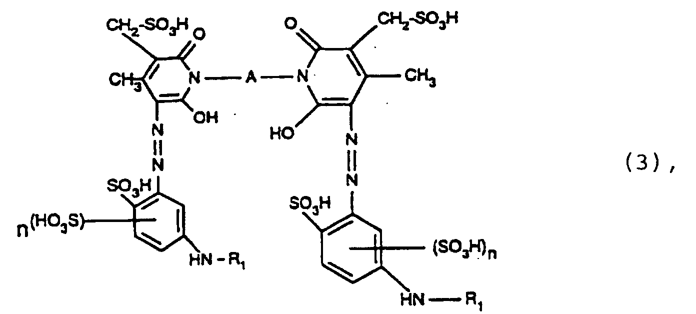 où R₁ possède la signification donnée à la revendication 1, A représente un groupe alkylène ayant 2 à 6 atomes de carbone, et n vaut 0 ou 1.

3. Colorants azoïques selon la revendication 2, où R₁ représente des groupes acryloyle, α-bromacryloyle, α-méthylacryloyle, α-chloracryloyle, α,β-dibromopropionyle ou α,β-dichloropropionyle, A représente -CH₂-CH₂-, -CH₂-CH₂-CH₂-, -CH₂-(CH₂)₂-CH₂-, -CH₂-(CH₂)₃-CH₂-, -CH₂-(CH₂)₄-CH₂-, -CH₂-CH(CH₃)-CH₂-CH₂- et n vaut 0 ou 1.

4. Colorants azoïques selon la revendication 3, où R₁ représente des groupes acryloyle, α-bromacryloyle ou α-méthylacryloyle, A représente -CH₂-CH₂-, -CH₂-CH₂-CH₂-, -CH₂-(CH₂)₂-CH₂-, -CH₂-(CH₂)₃-CH₂-, -CH₂-(CH₂)₄-CH₂-, -CH₂-CH(CH₃)-CH₂-CH₂- et n vaut 0 ou 1.

5. Procédé pour la préparation des colorants azoïques de formule (1) selon la revendication 1, **caractérisés en ce qu'**on diazote une amine de formule 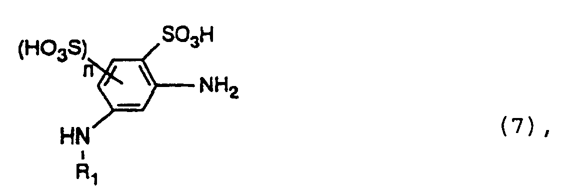 où R₁ et n possèdent les significations données à la revendication 1, et on copule sur un composant de copulation de formule 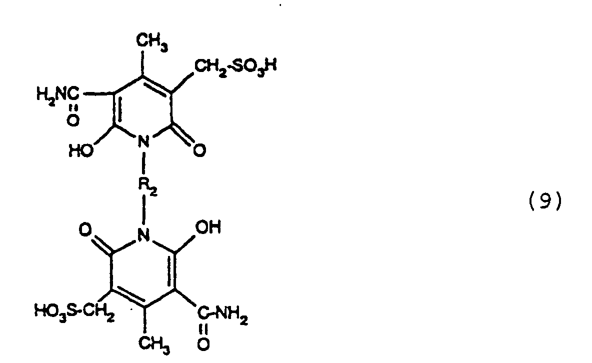 où R₂ possède la signification donnée à la revendication 2.

6. Utilisation des colorants azoïques selon les revednications 1 à 4 pour la teinture et l'impression de matières fibreuses azotées ou hydroxylées.
